Europäisches Patentamt

European Patent Office

Office européen des brevets

(19)

(11) Veröffentlichungsnummer : **0 057 226**
**B1**

(12) **EUROPÄISCHE PATENTSCHRIFT**

(45) Veröffentlichungstag der Patentschrift :
**09.10.85**

(21) Anmeldenummer : **81902294.8**

(22) Anmeldetag : **06.08.81**

(86) Internationale Anmeldenummer :
**PCT/CH 81/00089**

(87) Internationale Veröffentlichungsnummer :
**WO/8200450 (18.02.82 Gazette 82/06)**

(51) Int. Cl.⁴ : **B 65 D 83/14, G 05 D 7/01**

(54) SCHUBREGLER ZUR VERWENDUNG IM INNERN VON UNTER GASDRUCK STEHENDEN BEHÄLTERN.

(30) Priorität : **06.08.80 CH 5939/80**

(43) Veröffentlichungstag der Anmeldung :
**11.08.82 Patentblatt 82/32**

(45) Bekanntmachung des Hinweises auf die Patenterteilung : **09.10.85 Patentblatt 85/41**

(84) Benannte Vertragsstaaten :
**AT DE FR GB LU NL SE**

(56) Entgegenhaltungen :
**DE-A- 2 826 784**
**FR-A- 1 089 772**
**GB-A-   507 783**
**GB-A-   831 469**

(73) Patentinhaber : **Werding, Winfried Jean**
**77, avenue du Général Guisan**
**CH-1009 Pully (CH)**

(72) Erfinder : **Werding, Winfried Jean**
**77, avenue du Général Guisan**
**CH-1009 Pully (CH)**

(74) Vertreter : **Gasser, François W.**
**Hirschengraben 10 Postfach 1555**
**CH-3001 Bern (CH)**

EP 0 057 226 B1

**Beschreibung**

Die vorliegende Erfindung betrifft einen Schubregler zur Verwendung im Innern von unter Gasdruck stehenden Behältern, insbesondere Aerosolsprühdosen mit einem Auslassventil, das innerhalb des Behälters über einen Produktkanal einmündet, mittels welchem Schubregler die Menge des pro Zeiteinheit aus diesem Behälter austreibbaren Produktes trotz des sich mit zunehmender Entleerung des Behälters vermindernden Innendruckes, während der gesamten Entleerungszeit zumindest annähernd konstant gehalten werden kann, wobei der Schubregler einen Kolben aufweist, der durch den Druck im Behälter und gegen ein Rückstellelement verschiebbar ist.

Das Verbot von Aerosoldosen, welche als Treibgas chlorofluorierte Kohlenwasserstoffe verwenden, ist die Antwort verschiedener Länder auf die Gefahr, die diese Treibgase für die die Erde umschliessende Ozonschutzschicht darstellen.

Seit jeher sind praktisch die Hälfte der verkauften Spraydosen mit einem Gemisch von Propan-Butangas gefüllt, welche für die Ozonschicht gefahrlos sind, weil sie vorher bereits abgebaut werden. Da dieses Treibgasgemisch aber äusserst feuergefährlich und explosiv ist, müssen mindestens 55 % des Spraydoseninhaltes durch Verwendung von Wasser, Trichloräthan oder Methylenchlorid unbrennbar sein.

In vielen Ländern sind Trichloräthan und Methylenchlorid für kosmetische Produkte nur bis zu 35 % Produktmenge gestattet und, da sie mit Wasser zu einer gefährlichen Hydrolyse führen können, können die fehlenden 20 % unbrennbaren Anteils nicht aus Wasser bestehen. Nur Wasser als unbrennbaren Anteil zu verwenden, mindert die Qualität eines kosmetischen Produktes wesentlich, ganz abgesehen davon, dass man Wasser und Propan-Butan mittels eines Emulgators zu einer Emulsion mischen muss, die vor jedem Gebrauch ein Schütteln der Spraydose verlangt, um zu vermeiden, dass nach Ausstoss des unbrennbaren Anteils reines, höchst gefährliches Treibgasgemisch in der Spraydose zurückbleibt, aber auch, damit das ausgestossene Wasserprodukt eine genügend grosse Treibgasmenge enthält, die durch Entspannen an der Luft das Wasser zu feinen Tröpfchen zersprengt, wodurch man ein genügend schnelles Verdunsten erreichen kann. Da aber die Emulgatoren meistens Oele und Wachse enthalten, hat das ausgestossene Wasserprodukt einen schmierigen Charakter. Es ist daher praktisch unmöglich in Ländern wie Japan, England, Schweden usw., die ein feuchtes Klima haben, einen Haarlack auf Wasserbasis zu verkaufen, weil die in Wasser löslichen Harze des Haarlackes in feuchtem Wetter die Frisur nicht halten können.

Man hat versucht, als Treibmittel Kohlensäure, Stickstoff, Lachgas oder einfach Druckluft zu verwenden. Um aber eine auch bis zur völligen Entleerung akzeptierbare Zerstäubungsqualität und ein konstantes Sekunden-Ausstossvolumen des Produktes zu erzielen, müssen neue Mittel gefunden werden, denn diese inerten Gase zeigen einen Druckabfall, der direkt proportional zum grösser werdenden Restvolumen einer Spraydose durch Ausstossen des Produkteinhaltes ist, was aber die Zerstäubungsqualität mittels eines herkömmlichen Zerstäubers nicht konstant halten lässt ; sie wird bei Entleerung fortlaufend schlechter, abgesehen davon, dass das Produkt-Ausstossvolumen pro Zeiteinheit fortlaufend kleiner wird.

Der Anmelder vorliegender Erfindung hat eine Spritzdüse entwickelt, welche in der deutschen Offenlegungsschrift No. 28 26 784 vom 15. Februar 1979 unter der Bezeichnung « Spritzdüse sowie Spritzdüse enthaltende Vorrichtung und Verfahren zu deren Herstellung » beschrieben ist. Dank dieser Spritzdüse ist es möglich, mit wesentlich tieferen Drukwerten als bisher üblich eine gute Zerstäubungsqualität zu erreichen, was bedeutet, dass der Anfangsdruck der mit inerten Gasen gefüllten Spraydose bei ca. 6 bar, statt 10 bar liegen darf, weil die vorgenannte Spritzdüse auch noch mit einem Enddruck von ca. 2 bar eine akzeptierbare Sprühqualität abgibt, speziell, wenn es sich bei dem produkt um ein Alkohol-Methylenchloridgemisch handelt. Verwendet man einen höheren Anfangsdruck, z. B. 10,5 bar, so gibt die vorgenannte Spritzdüse eine Sprühwolke feinster Partikelgrösse ab.

Die vorgenannte Spritzdüse kann das Zerstäubungsproblem von Spraydosen mit inerten Gasen als Treibmittel insofern nur teilweise lösen, als sie keinerlei Einfluss auf das unabwendbare Sinken der Produkt-Ausstossrate pro Zeiteinheit hat.

Demgegenüber kann, wie dieser Offenlegungsschrift entnommen werden kann, die Verwendung eines Reduzierventils, das Gas aus einer Gas-Druckquelle in Abhängigkeit des Druckes ausserhalb der Druckquelle, speziell im Raum um das aus der Sprühdose zu versprühende Medium, ausströmen lässt, um einen vorbestimmten Druck zu erzeugen, der auf das Medium drückt, ein in etwa gleich bleibender Druck in der Sprühdose erzielt werden. Das Reduzierventil weist dabei einen Kolben auf, der eine diametrale Leitung enthält, von welcher ein axialer Zweig in der Stirnfläche des Kolbens, die dessen Konusspitze gegenüber liegt, ausmündet. Durch den Druck im Druckbehälter wird der Kolben entgegen einer Feder und dem Druck in der Sprühdose verschoben, wenn der Druck in der Sprühdose einen vorbestimmten Wert unterschreitet, so dass das Gas aus dem Druckbehälter durch die Leitung in die Sprühdose abgegeben werden kann.

Der Oberbegriff des Patentanspruches 1 geht von dem durch die obenerwähnte Offenlegungsschrift gebildeten Stand der Technik aus.

Es ist nun die Aufgabe der vorliegenden Erfindung, die hiervor erwähnten Nachteile herkömmlicher Aerosoldosen zu überwinden um Mittel zu schaffen, die imstande sind, die Produkt-Ausstossmenge pro Zeiteinheit konstant zu halten, die Zerstäubungsqualität der mit flüssigen Treibgasen gefüllten Spraydosen weitgehendst mit inerten, ungefährlichen Gasen zu erreichen und dem Verbraucher eine Aerosoldose zur Verfügung zu stellen, die wie die herkömmliche verwendet werden kann, deren Nachteile aber nicht aufweist und auf die er wegen der praktischen Handhabung und des Komforts, den sie bietet, nur ungern verzichten möchte.

Erfindungsgemäss wird die Aufgabe durch einen Schubregler gelöst, der dadurch gekennzeichnet ist, dass er in dem Produktkanal eine Querbohrung aufweist, in welcher der Kolben mit einer Bohrung mit einer zur Achse des Produktkanals zumindest annähernd parallelen Achse quer verschiebbar derart angeordnet ist, dass der Kolben durch eine einseitig durch Druck im Behälter beaufschlagte Membran entgegen dem Rückstellelement quer zum Produktkanal so verschoben wird, dass der Kolben bei einem einen oberen vorbestimmten Wert übersteigenden Druck im Behälter eine erste Endstellung einnimmt, bei welcher der Kolben durch die Bohrung den Produktkanal im Bereich der Querbohrung auf einen vorbestimmten minimalen Querschnitt reduziert und proportional zu dem durch das Entleeren des Behälters sich darin verkleinernden Druck den Querschnitt des Produktkanals im Bereich der Querbohrung durch ein Verschieben bis zum Erreichen einer zweiten Endstellung bis zu einem vorbestimmten Querschnitt derart vergrössert, dass diese zweite Endstellung dann erreicht wird, wenn ein vorbestimmter minimaler Druck im Behälter erreicht wird, und dass die Form der Bohrung in Abhängigkeit der Form des Produktkanals und der durch die Druckveränderungen im Behälter verursachten Verschiebung des Kolbens quer zur Achse des Produktkanals so ist, dass das Produkt aus Druck im Behälter mal Querschnitt des Produktkanals im Bereich des Kolbens selbst bei sich veränderndem Druck zumindest annähernd konstant bleibt.

In einer vorteilhaften Ausführungsform des Reglers ist vorgesehen, dass die Querbohrung und der Kolben unrund sind, derart, dass dieser gegen Verdrehung geschützt ist.

Einzelheiten der Erfindung werden hiernach anhand von vorteilhaften Ausführungsformen, die aber keinen limitativen Charakter haben, wie sie in der Zeichnung dargestellt sind, beschrieben. In der Zeichnung zeigt :

Figur 1   einen Schnitt durch einen erfindungsgemässen Schubregler, bevor in einem Behälter Druck erzeugt wird.

Figur 2   einen Schnitt durch das Erfindungsobjekt gemäss Fig. 1, wenn es unter Druck steht,

Figur 3   eine Draufsicht, teilweise im Schnitt eines unter Druck stehenden erfindungsgemässen Schubreglers,

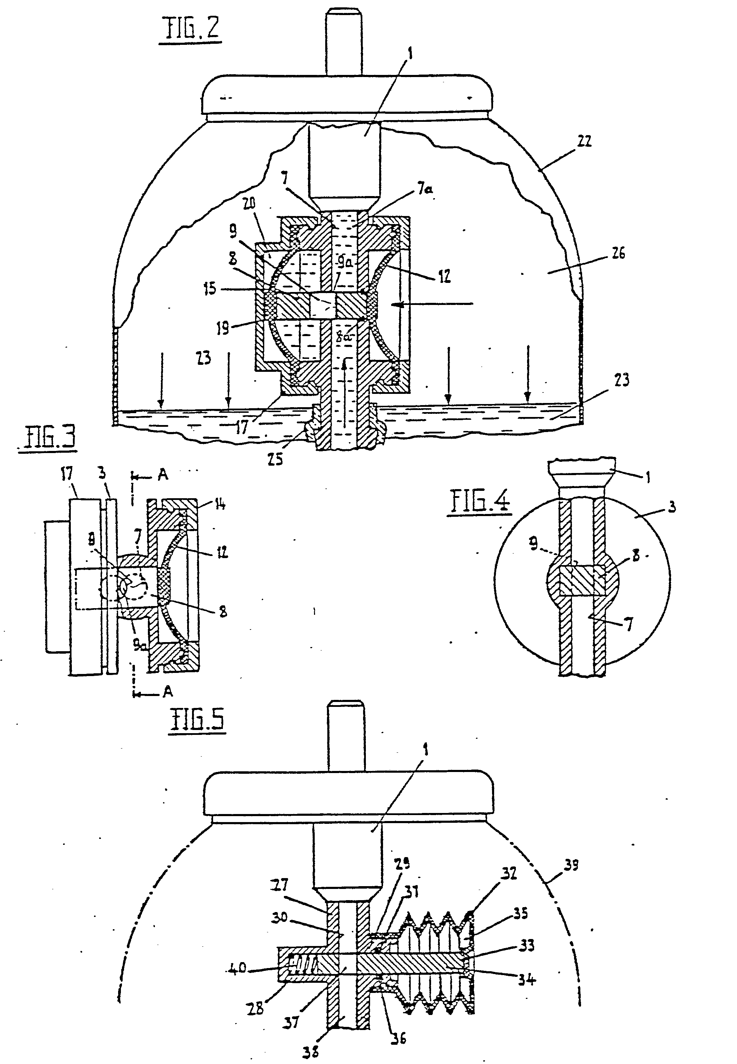

Figur 4   eine Ansicht, teilweise im Schnitt, gemäss A-A der Fig. 3,

Figur 5   einen teilweisen Schnitt durch eine andere vorteilhafte Ausführungsform des erfindungsgemässen Schubreglers,

Figur 6   einen Schnitt durch eine weitere vorteilhafte Ausführungsform des erfindungsgemässen Schubreglers, mit einem zusätzlichen Sicherheitsventil,

Figur 7   einen Schnitt durch eine äusserst vorteilhafte Ausführungsform des erfindungsgemässen Schubreglers, am freien Ende eines in ein Produkt eingetauchten Steigrohres, und

Figur 8   einen Schnitt durch eine andere höchst vorteilhafte Ausführungsform des erfindungsgemässen Schubreglers.

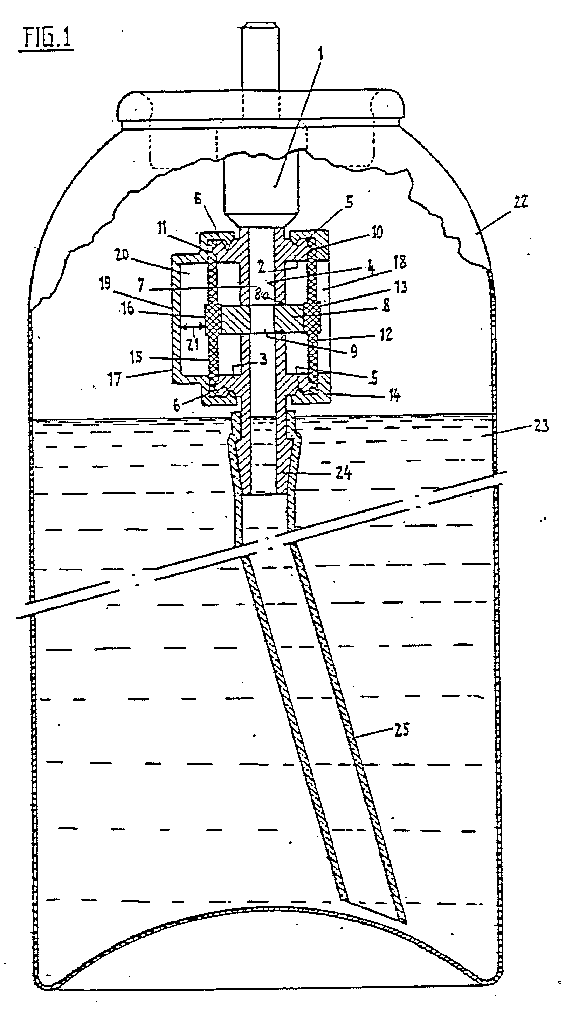

In Fig. 1 erkennt man ein herkömmliches Ventil 1 einer Spraydose 22, das mit einer Verlängerung 24 versehen ist, welche Rippen 2 und 3 trägt, zwischen welchen eine Querbohrung 4 vorgesehen ist, welche senkrecht zu einem Produktkanal 7 steht und die zur Aufnahme eines Differentialkolbens dient. Dieser trägt die Dichtung 8a und ist mit einer Bohrung 9 versehen, welche dann, wenn die Vorrichtung drucklos ist, sich in der Achse des Produktkanals 7 befindet. Die Rippe 2 kann mit einer Nut 5 und die Rippe 3 mit der Nut 6 versehen sein, welche einen Teil eines Schnappverschlusses darstellen. Ferner können die Rippen 2 und 3 Ringrippen 10 und 11 tragen, auf denen Membranen 12 und 15 aufliegen, die mit dem Differentialkolben 8 fest verbunden sind. Die Membran 12 kann im Zentrum mit einer Verdickung 13 und die Membran 15 mit einer Verdickung 16 versehen sein. Diese Membranen können je nach dem Behälter, resp. dem darin gelagerten Produkt und den verwendeten Lösungsmitteln, aus verschiedensten elastischen oder zumindest flexiblen Materialien wie Buna, Neopren, Viton, Butyl, Nitril, Epichlorhydrin, Weichpolyäthylen oder sogar rostfreiem Stahl bestehen. Die Membran 12 wird durch einen Dekkel 14 fest gegen die Rippe 2 gedrückt und die Membran 15 kann mit einem Boden 17 gegen die Rippe 3 angedrückt werden, wobei die Schnappverschlüsse 5 und 6 ein Abspringen des Deckels 14 und des Bodens 17 vermeiden. Diese könnten natürlich noch zusätzlich hochfrequenzverschweisst sein. Der Deckel 14 ist mit einer zentralen Oeffnung versehen, während der Boden 17 dank einer Wandung 19 die Membran 15 gegen den im Behälter 22 herrschenden Druck abschirmt und einen hermetisch geschlossenen Hohlraum 20 umfasst. Je nach dem Elastizitätsgrad der Membran 15 kann man zwischen ihrer Verdickung 16 und der Wandung 19 eine Druckfeder vorsehen, die die Membran 15 nach einer durch Druck hervorgerufenen Verformung wieder in die in Fig. 1 gezeigte Ausgangsstellung zurückdrückt. Der mit dem Doppelpfeil 21 gezeigte Abstand zwischen Verdickung 16 und Wandung 19 ist so gewählt, dass bei Anstossen der Verdickung 16 auf die Wandung 19, wie in Fig. 2 dargestellt, die Bohrung 9 soweit seitwärts verschoben wird, dass noch mindestens ein Teil 9a der Bohrung 9, wie in Fig. 3 illustriert, in Fluchtrichtung mit dem Kanal 7 bleibt, sodass dieser noch gerade durchgängig ist. Wird eine nicht dargestellte Druckfeder

3

eingesezt, so ist der mit dem Doppelpfeil 21 gezeigte Abstand, der verwandten Drahtstärke der Druckfeder entsprechend, grösser.

Die Fig. 1 zeigt die erfindungsgemässe Vorrichtung in eine herkömmliche Spraydose 22 eingeführt, die mit einem Produkt 23, aber ohne Druck gefüllt ist, wobei die Ventilverlängerung 24, die den Produktkanal 7 beinhaltet, in bekannter Weise mit einem Steigrohr versehen ist, sodass die dargestellte Einheit fertig zum Einführen des Treibmittels ist.

Die Fig. 2 und 3 zeigen, wie sich der erfindungsgemässe Schubregler unter Druck verhält. Nachdem die Spraydose 22, wie in Fig. 1 illustriert, mit dem Produkt 23 gefüllt und verschlossen ist, wird über das Ventil 1 in bekannter Weise eines der erwähnten inerten Gase eingeführt, das mittels des Steigrohres 25 via Produkt 23 den Gasraum 26 füllt. Der so entstehende Druck wirkt sowohl auf die Membran 12 als auch auf die Oberfläche des Produktes 23. Der Differenzialkolben 8 wird dadurch durch die Membran 12, welche durch den Druck im Behälter 22 gegen diesen gedrückt wird, entgegen dem Rückstellelement 15 (Membran) verschoben. Dadurch wird die Bohrung 9 des Kolbens 8 seitwärts verschoben, sodass lediglich ein Teil 9a derselben mit dem Kanal 7 in Verbindung steht, dessen restlicher Durchmesser durch den Kolben 8 verschlossen ist. Dadurch kommt es zu einer Drosselung der Produktsäule 7a, respektive einer Verkleinerung des Säulenquerschnittes bei erhöhter Ausstossgeschwindigkeit und gleichem Druck nach Ventilöffnung, was einer Schubminderung nach dem Regler entspricht. Dieser kann dabei nach bekannten Kriterien so konstruiert werden, dass abhängig vom Anfangsdruck, der mechanischen « break-up »-Qualität der Spritzdüse, den Ventildurchgängen, der Produktviskosität u. a., der Anfangsdruck die Oeffnung 9a so klein hält, dass die durch die Drosselung hervorgerufene Schubminderung einen für die Spritzdüse genügenden Ausstossdruck erzeugt und dass, wenn die auf die Membran 12 und 15 wirkenden Drucke nach Produktausstoss kleiner werden, sich die Oeffnung 9a so vergrössert, d. h. die Drosselung so vermindert, dass die Spritzdüse durch Vergrösserung der Produktsäulenoberfläche trotz kleinerem Druck eine identische Produktmenge pro Zeiteinheit zum Zerstäuben kommt, sodass die Sprühqualität bei gefülltem und praktisch entleertem Produktbehälter konstant bleibt. Dies bedeutet, dass, je grösser der Druck des Gasraumes 26 ist, desto stärker ist die Drosselung 9a. Fällt dieser Druck, so bringen die Elastizität der Membranen 12 und 15 oder gegebenenfalls die nicht dargestellte Druckfeder fortlaufend die Bohrung 9 des Kolbens 8 in das Lumen des Kanals 7, wodurch die Drosselung kleiner wird und der verminderte Druck der Produktsäule durch ein grösseres Produktangebot, bedingt durch den grösseren Produktsäulenquerschnitt, kompensiert wird.

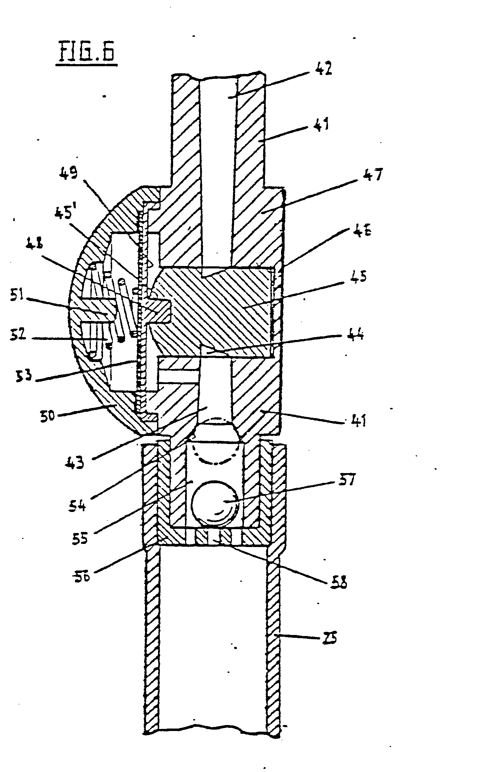

Die Fig. 5 zeigt eine andere vorteilhafte Ausführung des erfindungsgemässen Schubreglers. Ein herkömmliches Spraydosenventil 1 ist mit einer Rohrverlängerung 27 versehen, welche in Kreuzform ein geschlossenes Rohrstück 28 und ein offenes Rohrstück 29 trägt, welche sich gegenüber liegen und eine gemeinsame Bohrung 30 aufweisen. Das Rohrstück 29 ist mit einem Schnappverschluss 31 versehen, in den als Gegenstück ein blasbalgähnlicher Behälter 32 einrastet. Dieser hat einen Sitz 33, der einen Kolben 34 trägt. Ein Hohlraum 35 wird mit einem O-Ring 36, der den Kolben 34 umfasst, hermetisch abgedichtet. Der Kolben 34 besitzt eine Bohrung 37, die sich, wenn der Behälter 39 druckfrei ist, in der Achse des Ventilkanals 38 befindet. Im Innern des geschlossenen Rohrstückes 28 ist eine Druckfeder 40 untergebracht, auf die sich der Kolben 34 stützt. Wird in vorbeschriebener Weise der Behälter 38 unter Druck gesetzt, so verkleinert sich der Hohlraum 35 und drückt den Kolben 34 gegen die Druckfeder 40, wodurch die Bohrung 37 wie in Fig. 3 gezeigt, seitwärts geschoben wird. Dies führt wie beschrieben zur Drosselung der Produktsäule zum Ventil, was zur Erhöhung der Strömungsgeschwindigkeit des Produktes und gleichzeitig durch Verminderung der Querschnittsoberfläche der Produktsäule zu einer Druckverminderung führt. Fällt der Behälterdruck, so drückt die Druckfeder 40 den Kolben wieder gegen den Sitz 33, die Bohrung 37 rückt wieder in das Lumen des Kanals 38, wodurch die Strömungsgeschwindigkeit kleiner, dafür aber die Druchtrittsmenge grösser wird, was zur Folge hat, dass der Schub in Flussrichtung eines nach dem erfindungsgemässen Regler angeordneten Produktzerstäubers konstant gehalten wird. Dadurch wird die Zerstäubung durch Drosselung bei hohem Druck des Produktflusses auf diejenige Qualität reduziert, die nach Wegfallen der Drosselung und bei kleinerem Druck erreicht wird. Dabei bleibt während der gesamten Entleerungsdauer die Ausstossmenge des Produktes in Zeiteinheit konstant.

Die Fig. 6 zeigt eine weitere vorteilhafte Ausführungsform des erfindungsgemässen Schubreglers, speziell für Vorrichtungen, bei denen der Verbraucher, z. B. Aerosoldosen mit dem Ventil nach unten haltend nicht mehr ein Produkt, sondern nur das Treibgas austreten lässt. Handelt es sich dabei um ein Flüssiggas wie Frigen oder Propan-Butangemisch, so ist dies nicht schwerwiegend, im Gegenteil, man verlangt oft vom Verbraucher diese Anwendungsweise, um die Spritzdüse zu durchblasen, um ein Verstopfen derselben zu vermeiden. Ist aber eine Aerosoldose mit einem inerten Gas gefüllt, wie $CO_2$, $N_2$, $N_2O$ oder nur Druckluft, die ja lediglich auf den Produktspiegel drücken und das Produkt bei Oeffnen des Ventils, wodurch es zum beschriebenen Druckabfall kommt, weil sich der ja nicht wie beim Flüssiggas fortlaufend aufbaut, muss unbedingt jegliches Austreten von inerten Gasen vermieden werden. In der Ausführungsform gemäss Fig. 6 ist der Schubreglerkörper 41 mit konischen Kanälen 42 und 43 versehen, welche über den Einstich 44 des Differentialkolbens 45 verbunden sind. Der Körper 41 mit der Begrenzungswand 46 des Körperteils 47 und der Differentialkolben 45 sind im Spritzgussverfahren aus Plastik hergestellt, vorzugsweise auf Polyamid 12, das gegen alle in Aerosoldosen eingesetzten Lösungsmittel beständig ist, und praktisch keine Feuchtigkeit aufnimmt, also nicht quellen kann. Der Einstich 44 ist eine Ringnut. Ihre Querschnittoberfläche ist identisch mit derjenigen der Kanäle 42 und 43. Axial ist der Differentialkolben 45 mit der Bohrung 45′ versehen, in welche der Stift 48 der Membran 49 verbindend gelagert ist. Die Membran 49 ist vorzugsweise aus demselben Material wie der Differentialkolben 45 hergestellt. Sie ist durch das Gehäuse 50 verdeckt, das mit dem Anschlag 51 versehen ist. Im Gehäuse 50 befindet sich die Druckfeder 52, die die Lamellenfeder 53 gegen die Membran 49 drückt. Die Lamellenfeder 53 ist vorgesehen, um zu vermeiden, dass die Druckfeder 52, im direktem Kontakt mit der Membran 29, dieselbe, weil sehr dünn, beschädigt. Bei der Montage werden die Membran 49 und das Gehäuse 50 auf den Körper 41 geschweisst oder z. B. mit Ameisensäure geklebt. Der Differentialkolben 45 und die Membran 49 könnten auch aus einem Stück gespritzt sein und gegebenenfalls aus Teflon, Hytrel oder Viston bestehen. In diesem Falle könnte der Anschlag 51 durch einen, im Zentrum der Membran 49 gelegenen Stift, der gegen die Wand des Gehäuses 50 anschlägt, ersetzt werden. Dieser Stift wäre dann gleichzeitig der Haltekern der Feder 52. Man könnte somit auf die Lamellenfeder 53 verzischten. Der Kanal 43 ist mit dem konischen Sitz 54 versehen, wodurch der Raum 55 entsteht. Dieser ist mit der Kappe 46 verdeckt und enthält die Kugel 57, welche auf dem siebförmigen Boden 58 liegt. Der Abstand zwischen dem Siebboden 58 und dem Sitz 54 ist so gewählt, dass weder der Flüssigkeitsnoch der Gasdruck bei Verwendung wie in Fig. 6 dargestellt, die Kugel in den Sitz 54 zu drücken vermag. Hingegen rollt die Kugel 57, wie gestrichelt dargestellt, in den Sitz 54, sobald man den Schubregler so hält, dass der Kanal 43 über die Horizontale zu liegen kommt, sodass er dank der Kugel 57 verschlossen wird. Befindet sich also ein erfindungsgemässer Schubregler in einer Aerosoldose, die als Treibmittel ein inertes Gas enthält und man versucht, diese mit dem Ventil nach unten zu betätigen, wird dank der Kugel 57, die den Kanal 43 verschliesst, ein Austreten inerten Gases vermieden.

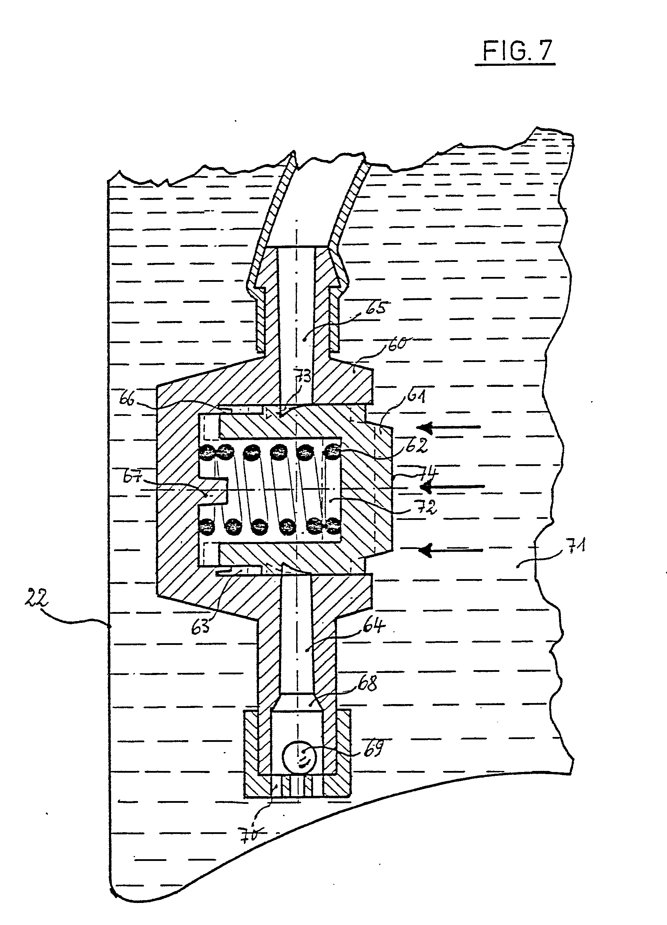

Die Fig. 7 zeigt eine äusserst vorteilhafte Ausführungsform des erfindungsgemässen Schubreglers, der am freien Ende eines in ein Produkt eingetauchten Steigrohres befestigt ist. Diese Anwendungsform drängt sich insofern auf, als der hermetische Verschluss zwischen Druckfederkammer und Druckmedium aus einer Ringlippe besteht, welche einer unter Druck stehenden Flüssigkeit gegenüber dicht ist, aber einem Gasmedium gegenüber, je nach Druck, nicht mehr dicht sein könnte, wodurch es also nicht mehr zu der genauen angestrebten Schubregelung kommen könnte, weil der Gasdruck sich wegen eventueller Undichtigkeit der Ringlippe in der Druckfederkammer aufbauen könnte.

Der erfindungsgemässe Schubregler besteht aus dem Gehäuse 60, dem Differentialkolben 61 und der Druckfeder 62. Das Gehäuse 60 weist die Kammer 63 auf, in welche der Kanal 64 einmündet und aus welcher der Kanal 65 ausmündet. Der Boden der Kammer 63 ist mit der Ringlippe 66 versehen, während sich in seinem Zentrum der Stift 67 befindet. Der Kanal 64 weist den Sitz 68 auf, der zur Aufnahme der Kugel 69 dient und trägt an seinem Ende die gelochte Hülse 70, welche ein Herausfallen der Kugel 69 aus dem Kanal 74 verhindert, jedoch Produkt 71 eintreten lässt. Der Differentialkolben 61 ist mit der Kammer 72 versehen, in welcher die Druckfeder 62 gelagert ist, wie in Fig. 7 dargestellt ist sie unbelastet, wodurch der Einstich 73 in der Achse der Kanäle 64 und 75 liegt, was der Endstellung des Differentialkolbens 61 entspricht, wenn der Behälter 22 vom Produkt 71 entleert ist, aber noch den Enddruck des inerten Gasmediums enthält, sodass eine ungedrosselte Verbindung zwischen Kanal 64 und Kanal 65 besteht. Ist der Behälter mit einem Produkt 71 gefüllt, auf dessen Oberfläche ein inerter Gasdruck wirkt, so wird der Differentialkolben 61 von dem auf seine Wandung 74 wirkenden Produktdruck in Richtung des Stiftes 67 gedrückt bis die Druckfeder 62 vollständig zusammengedrückt ist und also als Wegbregrenzung dient. Dabei nimmt der Differentialkolben 61 die mit den gestrichelten Linien dargestellte Lage ein, sodass der Einstich 73 den höchsten Drosseleffekt bewirkt. Die Stärke der Druckfeder 62 kann verschieden gross sein und ist von der gewünschten Produkt-Ausstossmenge pro Zeiteinheit, der Partikelgrösse der zerstäubten Produktes und dessen Viskosität abhängig. Vorschriften verschiedener Länder gestatten als verlorenes Volumen in einem Behälter 22, höchstens 30 % dessen Gesamtfüllvolumens, was bedeutet, dass dieser 30 prozentige Leerraum die Gasmenge aufnehmen muss, die einen solchen Druck abgibt, dass dieser bis zur vollständigen Entleerung des Produktes 71 noch genügend hoch ist, um die gewünschte Zerstäubungsqualität zu gewährleisten. Die vorstehend erwähnte Spritzdüse des Anmelders vorliegender Erfindung ist imstande, alkoholbasierte Produkte bei einem mechanischen Ausstossdruck von 3.3 bar mit einer Partikelgrösse von ca. 8 Mikron, und einem Ausstossdruck von 1.5 bar mit einer Partikelgrösse von ca. 25 Mikron zu versprühen. Mischt man dem Alkoholprodukt 35 % Methylenchlorid bei, so liegt die Partikelgrösse bei einem mechanischen Ausstossdruck von 3.3 bar bei ca. 5 Mikron. Will man also z. B. einen Haarlack, ein Insektizid oder einen Luftverbesserer versprühen, die aus verschiedensten Grüden schnell verdunsten müssen, also eine sehr kleine Partikelgrösse verlangen, so muss der Anfangsdruck in einem Behälter 22, der einen Gasraum, der 30 % des Gesamtbehältervolumens ausmacht, 11 bar sein, damit der letzte Tropfen eines Produktes 71 mit 3.3 bar ausgestossen wird, Druck, der zur verlangten Sprühqualität notwendig ist. Für andere Produkte 71 wie Körperdeos, Anti-Perspirants, Pflanzenpflegemittel u. a., welche nicht so schnell verdunsten müssen, kann der Anfangsdruck 9.5 bar sein, welcher im Laufe der Entleerung auf 2.85 bar sinkt. Diese Angaben zeigen, dass der erfindungsgemässe Schubregler Druckfedern 62 verschiedener Stärken enthalten muss, um den jeweiligen Produktbedingungen gerecht zu werden. Sie zeigen aber auch, dass sich der Einsatz eines erfindungsgemässen Schubreglers rechtfertigt, denn nur dank ihm ist es möglich, trotz dem krassen Druckabfall eine konstante Produkt-Ausstossmenge pro Zeiteinheit und eine, sich über die gesamte Entleerungsdauer erstreckende konstante Zerstäubungsqualität zu gewährleisten. Trägt man den verschiedenen Produktkategorien Rechnung, die in einem mit inertem Gas gefüllten Behälter gelagert werden können, so ergeben sich mindestens fünf verschiedene Ausstossdruckwerte, welche die den verschiedenen Produkten eigenen Diffusionsbedingungen erfüllen. Dabei muss nicht unbedingt eine Zerstäubung vorgesehen werden, denn der erfindungsgemässe Schubregler gestattet auch hochvisköse Produkte wie Seifen, Zahnpasta, Zwei-Komponenten-Kleber, Cremen, Senf usw. in konstanter Ausstossmenge pro Zeiteinheit abzugeben. In solchen Fällen könnten die Querschnitte der Kanäle 64 und 65, sowie der Einstich 73 grösser sein als für zu zerstäubende Produkte. Der erfindungsgemässe Schubregler ist praktisch allen Produkt-Diffusionsbedingungen anpassbar.

Nachstehend sind die vorzugsweise einzusetzenden Druckwerte beschrieben. Sie bewegen sich in der Limite der herkömmlich eingesetzten Ausstoss-Druckwerte.

Anfangsdruck : 11.0 bar — Enddruck : 3.30 bar

Haarlack, Insektizide, Raumluftverbesserer, hochvisköse Möbelpflegemittel, Farben, Lacke, hochvisköse Seifen und Zahnpasta, Zwei-Komponentenkleber, Kontaktkleber, Medikamente

Anfangsdruck : 9.5 bar — Enddruck : 2.85 bar

Körperdeodorants, Anti-Perspirants, Föhnfestiger, Pflanzenschutzmittel, Medikamente, hochvisköse Oele (unzerstäubt), visköse Seifen und Zahnpasta

Anfangsdruck : 8.0 bar — Enddruck : 2.40 bar

Pflanzenpflegemitel, Möbelpflegemitel, Rostschutzmitel, Autoprodukte, Duschseifen, Leime, Medikamente

Anfangsdruck : 6.5 bar — Enddruck : 1.95 bar

Eaux de Toilette, Parfums, Pre-Shaves, After-shaves, Körperlotion, visköse Schönheitscremen u. a., gezuckerte Kondensmilch, Medikamente, Rasiergel, Möbelpflegemittel

Anfangsdruck : 5.0 bar — Enddruck : 1.50 bar

Pre-shaves, After-shaves, Körperlotion, Fensterputzmittel, Möbelpflegemittel, Senf, Ketchup, Mayonnaise, Speiseöl, technische Oele, Schönheitscremen, Medikamente, flüssige Nahrungsmittelextrakte.

Selbstverständlich ist diese Liste nicht vollständig, sie zeigt aber den weitgreifenden Einsatzbereich des erfindungsgemässen Schubreglers.

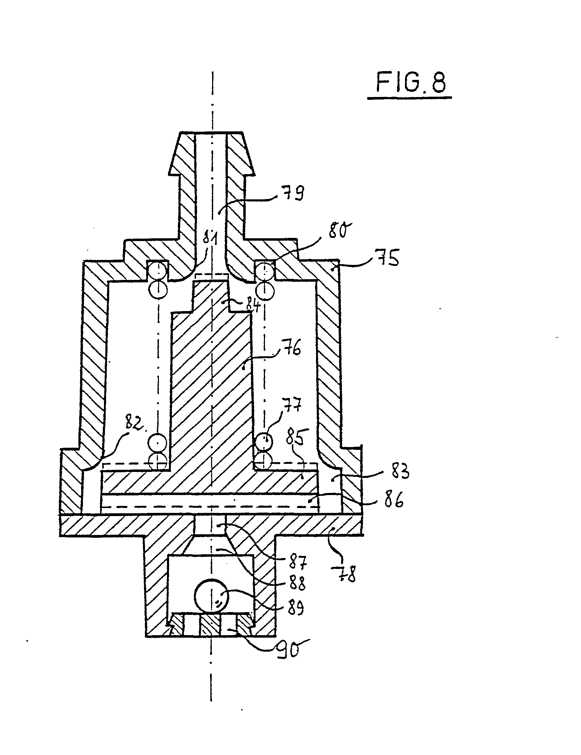

Die Fig. 8 zeigt einen Schnitt durch eine weitere, höchst vorteilhafte Ausführungsform des erfindungsgemässen Schubreglers, der speziell spritzguss- und montagetechnisch grosse Vorteile bietet. Es besteht aus dem Gehäuse 75, dem Differentialkolben 76, der Druckfeder 77 und dem Gehäusedeckel 78. Das Gehäuse 75 weist den Kanal 79 und den Druckfedersitz 80 auf. Die Einmündung des Kanals 79 hat eine konische Form 81 mit exponentieller Kurvengebung. Eine gleiche konische Form 82 befindet sich in Höhe der grossen Gehäuse-Oeffnung 83. Der Differentialkolben 76 ist an dem, dem Kanal 79 zugewandten Ende mit dem Stift 84 versehen, dessen Durchmesser dem Innendurchmesser des Konus 81 entspricht. Das andere Ende des Differentialkolbens 75 weist eine Scheibe 85 auf, deren Durchmesser dem Innendurchmesser des Konus 82 entspricht. Der Gehäusedeckel 78, mit dem Gehäuse 75 fest verbunden, hat in seinem Zentrum den Kanal 87 und den konischen Sitz 88, der mit der Kugel 89, welche auf dem gelochten Boden 90 liegt, verschlossen werden kann. Wie in Fig. 8 dargestellt, liegt die Druckfeder 77 in ihrem Sitz 80 und drückt den Differentialkolben 76 gegen den Gehäusedeckel 78. Ein vom Kanal 87 kommendes, unter Druck stehendes Produkt kann einerseits über die Nut 86 in das Gehäuse 75 eintreten und andererseits je nach Druckhöhe den Differentialkolben 76 so belasten, dass die dafür geeichte Druckfeder 77 zusammengedrückt wird, sodass sich die Abstände zwischen Stift 84 und Konus 81, sowie Scheibe 85 und Konus 82 so verkleinern, wie es die gestrichelten Linien darstellen, wodurch die angestrebte Drosselung und somit die Schubregelung erreicht wird. Die Drosselung an zwei verschiedenen Stellen ist notwendig, weil der erfindungsgemässe Schubregler vorzugsweise aus Plastikmaterial hergestellt werden soll, bei dem man aber nicht die notwendige Präzision erreichen könnte, was zur Folge haben könnte, dass speziell der Abstand zwischen Stift 84 und Konus 81 zu klein werden könnte, was einen vollständigen Verschluss zur Folge hätte. Den Durchmesser des Stiftes 84 kleiner zu halten als denjenigen des Konus 81, stellt ebenfalls Präzisionsprobleme in umgekehrtem Sinn, darf man doch nicht vergessen, dass ein erfindungsgemässer Schubregler in dieser Ausführungsform einen Gesamtdurchmesser von ca. 10 mm aufweist.

Der erfindungsgemässe Schubregler ist natürlich nicht auf Spraydosen begrenzt, sondern findet überall dort Anwendung, vo man trotz Druckabfall in einem Behälter eine konstant bleibende Ausstossmenge pro Zeiteinheit gewährleisten will.

# 0 057 226

Die Vorteile des erfindungsgemässen Reglers sind offensichtlich, gestattet er doch erstmals, speziell in Aerosoldosen die aus den eingangs erwähnten Gründen gefährlichen Treibgase und Gasgemische, die im Produktbehälter auch bei sich vergrösserndem Restvolumen einen annähernd konstanten Druck auf das auszutreibende Produkt ausüben, durch inerte, ungefährliche Gase oder Druckluft zu ersetzen. Dies, wohlverstanden, ohne dadurch die Zerstäubungsqualität im Verlaufe des Entleerungsprozesses zu verringern.

Es kann natürlich auch von Vorteil sein, dass ein geinger Teil des Produktes als Lösungsmittel ein flüssiges Treibgas enthält, aber statt wie bisher ca. 70 % nur ca. 10 %. Da aber der Druck der inerten Gase oder Luftdruck in Verwendung des erfindungsgemässen Schubreglers höher ist als der Dampfdruck des flüssigen Treibgases, kann dieses nie vergasen. Es bleibt also flüssig, im Produkt mit anderen Lösungsmitteln gemischt. Eine solche Mischung könnte z. B. für technische Produkte 55 % Methylenchlorid, 10 % Iso-Butan und 35 % Isopropan enthalten, oder für Haarlack 35 % Methylenchlorid, 10 % Frigen 12 und der Rest Alkohol, Harze usw. Der Vorteil liegt darin, dass sich das im flüssigen Zustand ausgestossene Treibgas an der Luft drastisch entspannt und dabei die anderen Lösungsmitteltröpfchen so zersprengt, dass es zu einer äusserst feinen Zerstäubung kommt, sollte diese unerlässlich sein.

Es ist selbstverständlich, dass der erfindungsgemässe Schubregler in diversen Punkten anders konstruiert werden kann als anhand der dargestellten Ausführungsbeispiele beschrieben. Dies trifft insbesondere auf die Formgebung der Bohrungen 9 und 37, der Einstiche 44 und 73 und der Konusse 81 und 82 zu, die vorteilhafterweise so zu wählen ist, dass durch ihre Querschnittveränderung in Anhängigkeit der Druckänderung in einem Behälter und der Rückstellkraft der Rückstellelemente, die Bedingungen der Konstanthaltung des Schubes, der auf eine Produktsäule wirkt, bei einem geöffneten Ventil unabhängig vom im Behälter herrschenden Innendruck konstant bleibt. Hinzukommt, dass die Kanäle der eingesetzten Aerosolventile mindestens einen gleichgrossen Querschnitt wie die Kanäle des erfindungsgemässen Schubreglers aufweisen.

Ein weiterer, wesentlicher Vorteil der Erfindung besteht darin, dass sie so gestaltet ist, dass sie in den herkömmlichen Aerosoldosen und mit den vorhandenen Maschinen eingesetzt werden kann, sodass also in der existierenden Aerosolindustrie keine Arbeitsplätze verloren gehen.

**Patentansprüche**

1. Schubregler zur Verwendung im Innern von unter Gasdruck stehenden Behältern, insbesondere Aerosolsprühdosen mit einem Auslassventil (1), das innerhalb des Behälters über einen Produktkanal (7) einmündet, mittels welchem Schubregler die Menge des pro Zeiteinheit aus diesem Behälter (22) austreibbaren Produktes, trotz des sich mit zunehmender Entleerung des Behälters vermindernden Innendruckes, während der gesamten Entleerungszeit zumindest annähernd konstant gehalten werden kann, wobei der Schubregler einen Kolben (8) aufweist, der durch den Druck im Behälter und gegen ein Rückstellelement (15) verschiebbar ist, dadurch gekennzeichnet, dass den Produktkanal (7) eine Querbohrung (4) aufweist, in welcher der Kolben (8) mit einer Bohrung (9) mit einer zur Achse des Produktkanals (7) zumindest annähernd parallelen Achse quer verschiebbar derart angeordnet ist, dass der Kolben (8) durch eine einseitig durch den Druck im Behälter (22) beaufschlagte Membran (12) entgegen dem Rückstellelement (15) quer zum Produktkanal (7) so verschoben wird, dass er bei einem einen oberen vorbestimmten Wert übersteigenden Druck im Behälter (22) eine erste Endstellung einnimmt, bei welcher der Kolben (8) durch die Bohrung (9) den Produktkanal (7) im Bereich der Querbohrung (4) auf einen vorbestimmten minimalen Querschnitt reduziert und proportional zum durch das Entleeren des Behälters (22) sich darin verkleinernden Druck den Querschnitt des Produktkanals (7) im Bereich der Querbohrung (4) durch ein Verschieben bis zum Erreichen einer zweiten Endstellung bis zu einem vorbestimmten Querschnitt derart vergrössert, dass diese zweite Endstellung dann erreicht wird, wenn ein vorbestimmter minimaler Druck im Behälter (22) erreicht wird, und dass die Form der Bohrung (9) in Abhängigkeit der Produktkanals (7) und der durch die Druckänderungen im Behälter (22) verursachten Verschiebung des Kolbens (8) quer zur Achse des Produktkanals (7) so ist, dass das Produkt aus Druck im Behälter (22) mal Querschnitt des Produktkanals (7) im Bereich des Kolbens (8) selbst bei sich veränderndem Druck zumindest annähernd konstant bleibt.

2. Regler nach Anspruch 1, dadurch gekennzeichnet, dass sowohl die Querbohrung (4) als auch der Kolben (8) unrund sind, derart, dass dieser gegen Verdrehung geschützt ist.

3. Regler nach Anspruch 1, dadurch gekennzeichnet, dass sowohl der Produktkanal (7) als auch die Bohrung (8) einen viereckigen Querschnitt aufweisen.

4. Regler nach Anspruch 1, dadurch gekennzeichnet, dass der Produktkanal (7) einen runden und die Bohrung (8) einen dreieckigen Querschnitt aufweisen.

5. Regler nach Anspruch 1, dadurch gekennzeichnet, dass das Rückstellelement (15) eine federnde Membran ist.

6. Regler nach Anspruch 1, dadurch gekennzeichnet, dass das Rückstellelement (15) eine Feder ist.

7. Regler nach Anspruch 1, dadurch gekennzeichnet, dass die Membran (12) aus einer elastischen Scheibe aus Buna, Nitril, Neopren, Butyl oder Epichlorhydrin besteht.

8. Regler nach Anspruch 1, dadurch gekennzeichnet, dass die Membran (12) durch einen eine Oeffnung (18) aufweisenden Deckel (14) gehalten wird.

7

9. Regler nach Anspruch 1, dadurch gekennzeichnet, dass das Rückstellelement (15) mittels eines Bodens (19) gegen den im Behälter (22) herrschenden Druck abgeschirmt wird.

10. Regler nach Anspruch 1, dadurch gekennzeichnet, dass der Kolben (45) und die Membran (46) einteilig ausgeführt sind.

11. Regler nach Anspruch 1, dadurch gekennzeichnet, dass das Rückstellelement (52) eine Feder ist, die sich gegen den Boden (19, 50) abstützt und über eine Membran (15, 49) auf den Kolben (8, 45) wirkt.

12. Regler nach Anspruch 11, dadurch gekennzeichnet, dass zwischen Feder (52) und Membran (49) eine Lamellenfeder (53) in Form einer Scheibe angeordnet ist.

13. Regler nach Ansprüchen 1 bis 10 und 12, dadurch gekennzeichnet, dass das Rückstellelement (15), resp. die Membran (49) mechanisch mit dem Kolben (8, 45) verbunden ist.

14. Regler nach Anspruch 1, dadurch gekennzeichnet, dass im unteren Teil des Produktkanals (7, 42, 43) ein Sitz (54) und eine damit zusammenwirkende Kugel (57) als Sicherheitsventil angeordnet sind.

15. Regler nach den Ansprüchen 1, 7 und 8, dadurch gekennzeichnet, dass sowohl der Produktkanal (7) als auch der Kolben (8) und der Deckel (14) und der Boden (19) aus Kunststoffmaterial wie Polyamid 66 oder Polyamid 12 bestehen.

16. Verwendung des Reglers nach Ansprüchen 1 bis 10 in einer Aerosolsprühdose (22) mit Auslassventil (1) und einem Sprühkopf, in welcher Dose das auf das Produkt (23) einwirkende Treibmittel (26) ein inertes Gas wie $CO_2$, $N_2$ oder $N_2O$ oder Druckluft ist und der Druck in der Dose (22) in ihrem mit Produkt (23) maximal gefüllten Zustand fünf bis acht bar und in ihrem vom Produkt (23) geleerten Zustand ein bis vier bar beträgt.

**Claims**

1. Thrust regulator for the use a the inside of receptacles, which are under gas pressure, especially aerosol spray cans with a discharge valve (1) that runs within the resceptacle in a product channel (7), a thrust regulator, by which the quantity of the product expellable from that receptacle (22) per unit of time can be kept approximately constant during the whole time of discharge in spite of the decreasing internal pressure that occurs with the increasing discharge, and which disposes of a piston (8) that is movable towards a reset device (15) by the pressure in the receptacle and characterized by the fact that the product channel (7) disposes of a cross hole (4), where the piston (8) is arranged with a bore (9) with an almost parallel axis diagonally movable to the axis of the product channel (7) in such a way that the piston (8) is shifted by a unilaterally impactable membrane (12) towards the reset device (15) diagonally to the product channel (7), so that it moves into a first final position if the pressure in the receptacle (22) exceeds a predetermined upper value, at which the piston (8) reduces the product channel (7) by the bore (9) in the area of the cross hole (4) to a predetermined minimal cross-cut and increases the cross-cut of the product channel (7) in the area of the cross hole (4) proportionally to the pressure that decreases in the receptacle (22) to a predetermined cross-cut because of the discharge by shifting up to the reaching of a second final position, a second final position that is attained if a predetermined minimal pressure in the receptacle (22) is reached and that the form of the bore (9) in dependence of the product channel (7) and the shifting of the piston (8) caused by the change of pressure in the receptacle (22), diagonal to the axis of the product channel (7), is such that the product of the pressure in the receptacle (22) multiplied by the cross-cut of the product channel (7) in the area of the piston (8) remains approximately constant, even if the pressure changes.

2. Regulator according to claim 1, characterized by the fact that the cross hole (4) as well as the piston (8) are not round so that it is protected from twisting.

3. Regulator according to claim 1, characterized by the fact that the product channel (7) as well as the bore (8) dispose of a quadrangular cross-cut.

4. Regulator according to claim 1, characterized by the fact that the product channel (7) disposes of a round cross-cut and the bore (8) of a triangular cross-cut.

5. Regulator according to claim 1, characterized by the fact that the reset device (15) is a spring-membrane.

6. Regulator according to claim 1, characterized by the fact that the reset device (15) is a spring.

7. Regulator according to claim 1, characterized by the fact that the membrane (12) consists of an elastic disc of buna, nitrile, neoprene, butyl or epichlorohydrine.

8. Regulator according to claim 1, characterized by the fact that the membrane (12) is kept by a cover (14) disposing of an opening (18).

9. Regulator according to claim 1, characterized by the fact that the reset device (15) is protected from the pressure at the inside of the receptacle (22) by a bottom (19).

10. Regulator according to claim 1, characterized by the fact that the piston (45) and the membrane (46) are executed in one piece.

11. Regulator according to claim 1, characterized by the fact that the reset device (52) is a spring that props up against the bottom (19, 50) and works on the piston (8, 45) by means of a membrane (15, 49).

12. Regulator according to claim 11, characterized by the fact that between the spring (25) and the membrane (49) a lamellar spring (53) in form of a disc is installed.

**0 057 226**

13. Regulator according to claims 1 to 10 and 12, characterized by the fact that the reset device (15) resp. the membrane (49) is linked mecanically to the piston (8, 45).

14. Regulator according to claim 1, characterized by the fact that in the lower part of the product channel (7, 42, 43) a seat (54) and a cooperating ball (57) are installed as a safety valve.

15. Regulator according to claims 1, 7 and 8, characterized by the fact that the product channel (7) as well as the piston (8), and the cover (14), and the bottom (19) consist of synthetic material such as polyamide 66 or polyamide 12.

16. To use the regulator according to claims 1 to 10 in an aerosol spray can (22) with a discharge valve (1) and a spray top, in which the gas-developing agent (26) that is working on the product (23) is an inert gas such as $CO_2$, $N_2$, or $N_2O$ compressed air and the pressure in the can (22) in its state of maximum charge with the product (23) runs from five to eight bar and in its empty state from one to four bar.


**Revendications**

1. Régulateur de poussée disposé à l'intérieur d'un récipient pressurisé, en particulier les bombes aérosols avec une valve de sortie (1), qui débouche à l'intérieur du récipient par l'intermédiaire d'un conduit (7) pour le produit, au moyen duquel régulateur de poussée il est possible de maintenir à peu près constante, pendant la durée totale du vidage, la quantité de produit expulsable de ce récipient par unité de temps, en dépit de la pression diminuant avec le vidage croissant du récipient, le régulateur de poussée présentant un piston (8) qui peut être déplacé par la pression dans le récipient et contre un élément de rappel (15), caractérisé par le fait que le conduit (7) pour le produit présente un perçage transversal (4), dans lequel le piston (8) avec un perçage (9) dont l'axe est à peu près parallèle au moins à l'axe du conduit (7) pour le produit, est disposé de façon mobile transversalement de telle manière que le piston (8) soit déplacé transversalement au conduit du produit (7) par une membrane (12) actionnée sur une face par la pression dans le récipient, à l'encontre de l'élément de rappel (15) de façon que le piston, lorsqu'il règne dans le récipient (22) une pression dépassant une valeur supérieure prédéterminée, une première position finale, dans laquelle le piston (8) grâce au perçage (9) réduit le conduit (7) du produit, au voisinage du perçage transversal (4), à une section minimale prédéterminée et proportionnellement à la pression qui diminue du fait du vidage du récipient (22), accroît en se déplaçant pour atteindre une seconde position finale, la section du conduit du produit (7) dans le voisinage du perçage transversal (4), jusqu'à une section prédéterminée de telle façon que cette seconde position finale soit adoptée quand une pression minimale prédéterminée est atteinte dans le récipient (22), et par le fait que la forme du perçage (9) en fonction du conduit du produit (7) et du déplacement du piston (8) transversalement à l'axe du conduit (7) du produit, provoqué par les variations de pression dans le récipient (22) est telle que le produit de la pression dans le récipient (22) par la section du conduit du produit (7) au voisinage du piston (8) demeure au moins à peu près constant même dans le cas d'une pression qui varie.

2. Régulateur selon la revendication 1, caractérisé par le fait qu'aussi bien le perçage transversal (4) que le piston (8) sont ovalisés de façon à empêcher ce dernier de tourner.

3. Régulateur selon la revendication 1, caractérisé par le fait qu'aussi bien le conduit du produit (7) que le perçage (8) présentent une section carrée.

4. Régulateur selon la revendication 1, caractérisé par le fait que le conduit du produit (7) présente une section circulaire et le perçage (8) une section triangulaire.

5. Régulateur selon la revendication 1, caractérisé par le fait que l'élément de rappel (15) est une membrane élastique.

6. Régulateur selon la revendication 1, caractérisé par le fait que l'élément de rappel (15) est un ressort.

7. Régulateur selon la revendication 1, caractérisé par le fait que la membrane (12) est constituée par un disque élastique en buna, nitrile, néoprène, butyle ou épichlorhydrine.

8. Régulateur selon la revendication 1, caractérisé par le fait que la membrane (12) est maintenue par un couvercle (14) présentant une ouverture.

9. Régulateur selon la revendication 1, caractérisé par le fait que l'élément de rappel (15) est protégé de la pression régnant dans le récipient (22), au moyen d'un fond (19).

10. Régulateur selon la revendication 1, caractérisé par le fait que le piston (45) et la membrane (46) sont réalisés en une seule pièce.

11. Régulateur selon la revendication 1, caractérisé par le fait que l'élément de rappel (52) est un ressort, qui s'appuie contre le fond (19, 50) et qui agit sur le piston (8, 45) par l'intermédiaire d'une membrane (15, 49).

12. Régulateur selon la revendication 11, caractérisé par le fait qu'est disposé, entre le ressort (52) et la membrane (49), un ressort à lamelles (53) sous forme d'un disque.

13. Régulateur selon les revendications 1 à 10 et 12, caractérisé par le fait que l'élément de rappel (15), la membrane (49) respectivement, sont assemblés mécaniquement au piston (8, 45).

14. Régulateur selon la revendication 1, caractérisé par le fait qu'est disposé, dans la partie inférieure du conduit du produit (7, 42, 43), un siège (54) ainsi qu'une bille (57) agissant conjointement avec ce dernier, comme soupape de sûreté.

9

**0 057 226**

15. Régulateur selon les revendications 1, 7 et 8, caractérisé par le fait qu'aussi bien le conduit (7) du produit que le piston (8) de même que le couvercle (14) et le fond (19) sont dans une matière plastique comme le polyamide 66 ou le polyamide 12.

16. Utilisation du régulateur selon les revendications 1 à 10 dans une bombe aérosol (22) avec valve de sortie (1) et atomiseur, dans laquelle bombe, l'agent propulseur (26) agissant sur le produit (23) est un gaz inerte comme le $CO_2$, le $N_2$ ou le $N_2O$ ou de l'air comprimé et la pression dans la bombe (22) est de cinq à huit bars dans son état rempli au maximum avec le produit (23) et de un à quatre bars lorsqu'elle est vidée dudit produit (23).

FIG.1

FIG.2

FIG.3

FIG.4

FIG.5

2

## FIG.6

FIG. 7

FIG.8